(19) Europäisches Patentamt

**European Patent Office**

**Office européen des brevets**

(11) Veröffentlichungsnummer: **0 135 224 B1**

(12) # EUROPÄISCHE PATENTSCHRIFT

(45) Veröffentlichungstag der Patentschrift: **08.07.92**

(51) Int. Cl.⁵: **G02B 6/44**

(21) Anmeldenummer: **84201137.1**

(22) Anmeldetag: **02.08.84**

---

(54) **Verfahren zur Herstellung von Kabeln sowie nach diesem Verfahren hergestellte Kabel, insbesondere optische Kabel.**

---

(30) Priorität: **11.08.83 DE 3328948**

(43) Veröffentlichungstag der Anmeldung:
**27.03.85 Patentblatt 85/13**

(45) Bekanntmachung des Hinweises auf die Patenterteilung:
**08.07.92 Patentblatt 92/28**

(84) Benannte Vertragsstaaten:
**DE FR GB IT NL SE**

(56) Entgegenhaltungen:
**DE-A- 3 108 109**
**GB-A- 2 017 335**
**US-A- 4 154 783**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfa-brieken**
**Groenewoudseweg 1**
**NL-5621 BA Eindhoven(NL)**

(84) Benannte Vertragsstaaten:
**FR GB IT NL SE**

(72) Erfinder: **Becker, Johann Arnold, Dr.**
**Zöllnerstrasse 64**
**W-5063 Overath(DE)**
Erfinder: **Zell, Werner, Dr. rer. nat.**
**Gleiwitzerstrasse 15**
**W-5000 Köln(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft ein Verfahren zur Herstellung von Kabeln, bei denen die zur Übertragung vorgesehenen Kabelelemente mit mindestens einem strangförmigen, sich über die gesamte Kabellänge erstreckenden und aus Kunststoff bestehenden Stützelement verbunden und danach gemeinsam mit dem Stützelement bzw. den Stützelementen von einem Kabelmantel umhüllt werden.

Durch die DE-A-31 12 422 ist bekannt, in der Kabelseele zusätzlich zu den Übertragungselementen, die hier optische Lichtwellenleiter sind, sog. Blindelemente hinzuzufügen, um der Kabelseele einen möglichst keisförmigen Querschnitt zu geben. Diese Blindelemente, die auch als Trensen bezeichnet werden, können beispielsweise aus Kunststoff bestehen.

Durch die DE-A-31 33 695 ist ein Kabel bekannt, bei dem die Übertragungselemente in längsverlaufenden Auskehlungen eines zentralen Einlegstückes liegen, das ebenfalls aus Kunststoff besteht. Dieses Einlegstück wird anschließend z.B. mit einem Kunststoffschlauch ummantelt, der auf das Einlegstück aufgeschrumpft wird.

Nachteilig an diesen Kabeln ist, daß die aus Kunststoff bestehenden Blindelemente bzw. zentralen Einlegestücke (Stützelemente) bei Erwärmung und wiedererkühlung des Kabels einem irreversiblen Schrumpfprozeß unterliegen, der sowohl auf die mechanischen Eigenschaften von Kabeln als auch insbesondere auf Übertragungseigenschaften optischer Kabel einen erheblichen Einfluß hat.

Beispielsweise kann hierdurch eine gemischte Bewehrung eines Kabels, das neben Stützelementen aus Kunststoff auch zugfeste, nicht schrumpfende Elemente besitzt, in unzulässiger Weise mechanisch beansprucht werden, wenn das Kabel sehr hohen Temperaturen ausgesetzt wird. Duch den bei Abkühlung des Kabels einsetzenden Schrumpfprozeß der Stützelemente korben dann die zugfesten Elemente auf und belasten den auf der Bewehrung liegenden Kabelmantel zusätzlich.

Bei optischen Kabeln wirkt sich ein Schrumpfprozeß von Stützelementen, die beispielsweise gemeinsam mit optischen Lichtwellenleitern (LWL) in einer Kabelseele angeordnet sind, auf eine evtl. im Kabel vorhandene Überlänge der LWL aus, so daß hierdurch die optischen Übertragungseigenschaften des Kabels in unkontrollierter Weise verändert werden.

Bei einem durch die GB-A-20 17 335 bekannten optischen Kabel sind in einer Kabelhülle Lichtwellenleiter ohne Stützelemente lose geführt. Die um die Lichtwellenleiter extrudierte Kabelhülle wird zur Verminderung einer späteren Nachschrumpfung auf der Förderstrecke zu einer Aufwickeltrommel kurzzeitig erwärmt.

Aus Kunststoff bestehende Stützelemente für optische Kabel sind durch die DE-A-31 08 109 bekannt.

Aufgabe der vorliegenden Erfindung ist es, ein Verfahren zur Herstellung von Kabeln anzugeben, deren Stützelemente auch nach höherer Temperatureinwirkung nicht mehr in unzulässiger Weise schrumpfen.

Diese Aufgabe wird gemäß der Erfindung bei einem Verfahren der eingangs genannten Art gelöst, wobei das Stützelement bzw. die Stützelemente vor ihrer Verbindung mit den Kabelelementen in zugentlastetem Zustand getempert und dabei auf eine Temperatur bis kurz unterhalb der Erweichungstemperatur des Kunststoffes aufgeheizt und wieder auf Umgebungstemperatur abgekühlt wird bzw. werden.

Untersuchungen an kontraktionsfähigen Stützelementen wie Trensen oder Einlagestücke haben gezeigt, daß dem reversiblen Prozeß der thermischen Expansion und Kontraktion ein irreversibler Kontraktionsvorgang überlagert ist, der im folgenden als Schrumpfvorgang bezeichnet werden soll. Dieser Schrumpfvorgang ist dabei als eine im Laufe der Zeit eintretende irreversible Volumen- bzw. Längenänderung zu verstehen, dessen zeitlicher Ablauf durch eine Wärmebehandlung bei relativ hoher Temperatur im Sinne einer Alterung beschleunigt werden kann.

Der Schrumpfvorgang wird erfindungsgemäß schon vor der Verbindung der Stützelemente mit den anderen Kabelelementen gezielt eingeleitet und beendet, so daß er bei späteren Temperaturerhöhungen nicht mehr in Erscheinung tritt. Hierdurch wird vermieden, daß infolge späterer Temperaturerhöhungen des Kabels Längenänderungen der Stützelemente auftreten, die das Kabel zusätzlich mechanisch belasten bzw. dessen Übertragungseigenschaften mindern.

Die Stützelemente können zur Durchführung des irreversiblen Schrumpfprozesses vorteilhaft z.B. auf einer gepolsterten Trommel oder auf einer Trommel aus Kunststoff aufgewickelt werden, die gegenüber den Stützelementen eine niedrigere Erweichungstemperatur besitzt. Hierdurch wird erreicht, daß die Stützelemente sich in einem zugentlasteten Zustand befinden, da bei Einsetzen des Schrumpfvorganges bzw. Verkleinerung des Wicklungsdurchmessers der auf der Trommel aufgewickelten Stützelemente der Trommeldurchmesser ebenfalls nachgeben kann.

Vorzugsweise liegt die Temperzeit im Stundenbereich, da sich damit ein weitgehender Abschluß des irreversiblen Schrumpfvorganges erreichen läßt.

Die Zeichnung stellt Ausführungsbeispiele von nach dem erfindungsgemäßen Verfahren gefertigten Kabeln dar. Es zeigen:

Fig. 1  ein Kabel mit einer gemischten Bewehrung,

Fig. 2 und 3  optische Kabel mit kreisförmigem Querschnitt, und

Fig. 4  ein optisches Kabel mit rechteckförmigem Querschnitt.

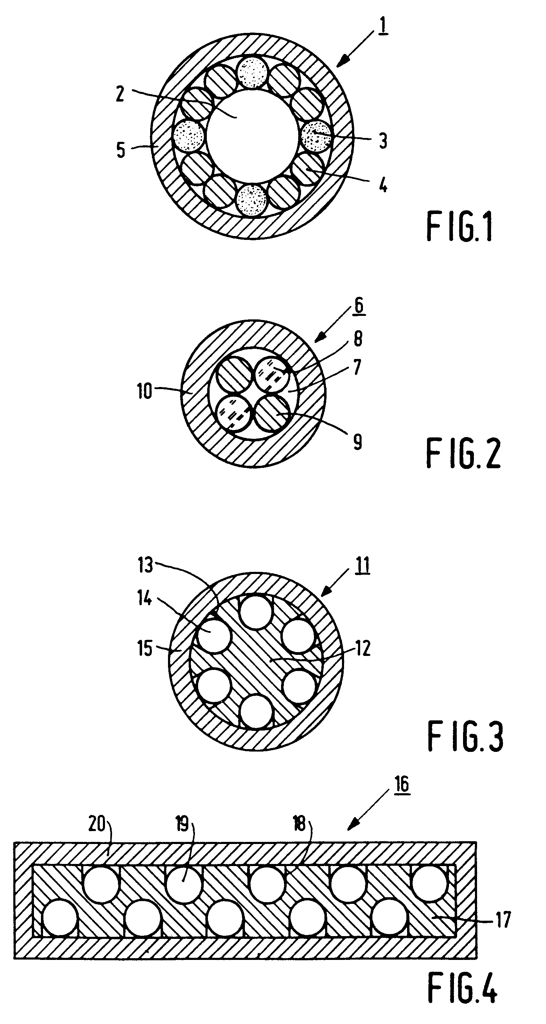

Das in Fig. 1 dargestellte Kabel 1 besteht aus einer Seele 2, die beliebig aufgebaut sein kann. Beispielsweise kann die Seele optische Wellenleiteradern oder metallene Adern enthalten. Auf der Kabelseele 2 ist eine gemischte Bewehrung angeordnet, die aus zugfesten Elementen 3, z.B. Aluminiumseilen, und dazwischen angeordneten Kunststoff-Trensen 4 (Stützelemente) besteht. Die KunststoffTrensen 4 dienen zur Erzeugung eines kreisförmigen Kabelquerschnittes. Das Kabel 1 besitzt ferner einen Mantel 5, der unmittelbar auf der gemischten Bewehrung aufgebracht ist. Dieser kann z.B. extrudiert sein.

Die Trensen 4 bestehen vorzugsweise aus Polyäthylen oder Polypropylen, und liegen bespielsweise in Form von Garnen, Vollmaterial oder Schläuchen vor. Vor der Einbringung der Trensen 4 in die gemischte Bewehrung sind diese bei einer Temperatur getempert worden, die etwas niedriger als die Erweichungstemperatur des jeweiligen Kunststoffes liegt, für Polypropylen-Trensen beispielsweise 120°C bei einer Temperzeit von ca. 6 h. Die Erweichungstemperatur für Polypropylen liegt bei etwa 150°C.

Trensen aus Polyäthylen werden vorzugsweise bei 90°C bis 100°C getempert, da dessen Erweichungstemperatur bei ca. 110°C liegt.

Zur Temperung sind die Trensen 4 auf einer gepolsterten Trommel aufgewickelt, so daß bei Schrumpfung der Trensen 4 und sich verringerndem Wickeldurchmesser der Durchmesser der polsterten Trommel ebenfalls abnehmen kann. Die Trensen 4 befinden sich somit in einem zugentlasteten Zustand.

Statt der gepolsterten Trommel läßt sich auch eine solche verwenden, die aus thermoplastischem Kunststoff besteht, der eine niedrigere Erweichungstemperatur als die Trensen besitzt. Bei einer Temperatur in der Nähe dieser niedrigeren Erweichungstemperatur kann die Trommel durch die schrumpfenden Trensen zusammengedrückt werden. Beispielsweise können Polypropylen-Trensen auf Polyäthylen-Rohren bei ca. 110°C geschrumpft werden.

In der Fig. 2 ist ein optisches Kabel 6 gezeigt, in dessen Kabelseele 7 jeweils zwei LWL-Adern 8 und zwei strangförmige, sich über die gesamte Kabellänge erstreckende Kunststoff-Trensen 9 angeordnet sind. Die Kunststoff-Trensen 9 (Stützelemente) dienen zur Erzeugung eines kreisförmigen Kabelquerschnittes. Sowohl die LWL-Adern 8 als auch die Kunststoff-Trensen 9 sind von einem gemeinsamen Kabelmantel 10 umgeben. Innerhalb der Kabelseele können sich weiterhin noch zugentlastende Elemente befinden (nicht dargestellt). Darüber hinaus können die LWL-Adern 8 und die Kunststoff-Trensen 9 z.B. mit großem Schlag verseilt sein.

Die Kunststoff-Trensen 9 sind getempert, so daß ihr Schrumpfvermögen praktisch beseitigt ist. Eine erneute Temperaturerhöhung z.B. des verlegten Kabels kann somit keine irreversible Längenkontraktion der Kunststoff-Trensen 9 mehr bewirken. Damit ist die Gefahr einer Beeinträchtigung der Übertragungseigenschaften des optischen Kabels 6, z.B. durch Veränderung der Überlänge der Wellenleiterfasern 8 infolge der Schrumpfung der Kunststoff-Trensen 9, beseitigt.

In der Fig. 3 ist ebenfalls ein optisches Kabel 11 mit kreisförmigem Querschnitt gezeigt. Es besitzt ein zentrales Stützelement 12 aus Kunststoff, das in Auskehlungen 13 LWL-Adern 14 aufnimmt. Die LWL-Adern 14 werden von einem gemeinsamen Kabelmantel 15 in den Auskehlungen 13 gehaltert.

Das zentrale Stützelement 12 kann aus Polypropylen oder Polyäthylen oder einem sonst geeigneten Kunststoff bestehen und ist zur Beseitigung des irreversiblen Schrumpfens bei einer Temperatur unterhalb der Erweichungstemperatur des Kunststoffes getempert. Einige der LWL-Adern 14 können zur Erhöhung der Kabelfestigkeit durch zugfeste Elemente (nicht dargestellt), z.B. glasfaserverstärkte Kunststoff-Elemente, ersetzt sein. Selbstverständlich können in den Auskehlungen 13 statt der LWL-Adern 14 auch metallene Übertragungselemente angeordnet sein.

Die Fig. 4 zeigt ein flaches, bandförmiges Kabel 16, bei dem das Stützelement 17 einen rechteckförmigen Querschnitt besitzt. Das aus Kunststoff bestehende Stützelement 17 besitzt an seiner oberen und unteren Seite parallel zueinander verlaufende Nuten 18, in denen Übertragungselemente, z.B. LWL-Adern 19, angeordnet sind. Diese werden durch einen gemeinsamen Mantel 20 in den Nuten gehalten.

In einigen der Nuten 18 können statt der LWL-Adern 19 auch zugentlastende Elemente angeordnet sein.

Der irreversible Schrumpf des Stützelementes 17 ist durch Temperung bei einer Temperatur kurz unterhalb der Erweichungstemperatur des entsprechenden Kunststoffes beseitigt worden.

**Patentansprüche**

1. Verfahren zur Herstellung von Kabeln, bei denen die zur Übertragung vorgesehenen Kabelelemente (8,14,19) mit mindestens einem strangförmigen, sich über die gesamte Kabelstrecke erstreckenden und aus Kunststoff bestehenden Stützelement (5,9,12,17) verbunden und danach gemeinsam mit dem Stützelement bzw. den Stützelementen von einem Kabelmantel (5,10,15,20) umhüllt werden, wobei das Stützelement bzw. die Stützelemente (4,9,12,17) vor der Verbindung mit den Kabelelementen (8,14,19) in zugentlastetem Zustand getempert und dabei auf eine Temperatur bis kurz unterhalb der Erweichungstemperatur des Kunststoffes aufgeheizt und wieder auf Umgebungstemperatur abgekühlt wird bzw. werden.

2. Verfahren nach Anspruch 1,
dadurch gekennzeichnet, daß das Stützelement bzw. die Stützelemente (4,9,12,17) zur Erwärmung, Temperung und Abkühlung auf eine gepolsterte Trommel aufgewickelt wird bzw. werden.

3. Verfahren nach Anspruch 1,
dadurch gekennzeichnet, daß das Stützelement bzw. die Stützelemente (4,9,12,17) zur Erwärmung, Temperung und Abkühlung auf eine Trommel aus Kunststoff aufgewickelt wird bzw. werden, die gegenüber dem Stützelement bzw. den Stützelementen eine niedrigere Erweichungstemperatur besitzt.

4. Verfahren nach Anspruch 1,2 oder 3,
dadurch gekennzeichnet, daß die Temperzeit im Stundenbereich liegt.

## Claims

1. A method of manufacturing cables in which the transmission elements (8, 14, 19) of the cables are connected to at least one rope-shaped, synthetic resin supporting element (5, 9, 12, 17) which extends over the entire cable length, after which the cable elements and the supporting element(s) are enveloped by a cable sheath (5, 10, 15, 20), in which method the supporting element(s) (4, 9, 12, 17), prior to being connected to the cable elements (8, 14, 19), is (are) subjected to a tempering treatment in a strain-relieved condition, in which treatment it (they) is (are) heated to a temperature slightly below the softening temperature of the synthetic resin and cooled again to ambient temperature.

2. A method as claimed in Claim 1, characterized in that the supporting element(s) (4, 9, 12, 17) is (are) wound on a drum coated with a compressible material and is (are) then heated, tempered and cooled.

3. A method as claimed in Claim 1, characterized in that the supporting element(s) (4, 9, 12, 17) is (are) wound on a synthetic resin drum having a lower softening temperature than the supporting element(s) and is (are) then heated, tempered and cooled.

4. A method as claimed in Claim 1, 2 or 3, characterized in that the tempering time is in the order of a few hours.

## Revendications

1. Procédé de fabrication de câbles dans lesquels les éléments de câble (8, 14, 19) prévus pour la transmission sont reliés à au moins un élément de support (4, 9, 12, 17) en forme de toron s'étendant sur toute la longueur du câble et constitué de matière plastique pour être revêtus ensuite d'une gaine de câble (5, 10, 15, 20), ensemble avec l'élément de support ou les éléments de support, l'élément de support ou les éléments de support (4, 9, 12, 17) étant recuit(s) dans un état de décharge de traction avant d'être reliés aux éléments de câble (8, 14, 19), opération de recuit pendant laquelle ils sont chauffé(s) jusqu'à une température peu inférieure à la température de ramollissement de la matière plastique pour être refroidi(s) à nouveau jusqu'à la température ambiante.

2. Procédé selon la revendication 1, caractérisé en ce que, pour le chauffage, le recuit et le refroidissement, l'élément de support ou les éléments de support (4, 9, 12, 17) est (sont) enroulé(s) sur un tambour rembourré.

3. Procédé selon la revendication 1, caractérisé en ce que, pour le chauffage, le recuit et le refroidissement, l'élément de support ou les éléments de support (4, 9, 12, 17) est (sont) enroulé(s) sur un tambouren matière plastique qui, par rapport à l'élément de support ou aux éléments de support, présente une faible température de ramollissement.

4. Procédé selon la revendication 1, 2 ou 3' caractérisé en ce que le temps de recuit est de l'ordre de quelques heures.

FIG.1

FIG.2

FIG.3

FIG.4